# EUROPEAN PATENT SPECIFICATION

(11) **EP 3 406 870 B1**
(45) Date of publication and mention of the grant of the patent: **18.12.2019**
(21) Application number: 18174429.3
(22) Date of filing: 25.05.2018
(51) Int. Cl.: F01N 3/10, F01N 3/20, F01N 13/00

(54) **AFTER TREATMENT SYSTEM (ATS) FOR AN INTERNAL COMBUSTION ENGINE**
ABGASNACHBEHANDLUNGSSYSTEM FÜR BRENNKRAFTMASCHINE
SYSTÈME DE POST-TRAITEMENT DES GAZ D'ÉCHAPPEMENT POUR MOTEUR À COMBUSTION INTERNE

(30) Priority: 26.05.2017 IT 201700057697
(43) Date of publication of application: 28.11.2018
(73) Proprietor: FPT Motorenforschung AG, 9320 Arbon (CH)
(72) Inventor: GSTREIN, Wolfgang, 6900 BREGENZ (AT)
(74) Representative: Fiume, Orazio

(56) References cited:
- EP-A1- 1 321 641
- DE-A1-102014 201 077
- DE-A1-102015 013 864
- US-A1- 2015 337 702

## Description

### Priority Claim

This application claims priority from Italian Patent Application No. 102017000057697 filed on 26/05/2017.

### Field of the invention

The present invention relates to an After Treatment System (ATS) for an internal combustion engine and to an internal combustion engine, diesel or fuel lean burn spark ignited combustion engine comprising the same.

### Description of the prior art

An after treatment system (ATS) is connected on the exhaust line of the internal combustion engine and, according to the engine cycle implemented, gasoline/diesel, it comprises a certain number of devices to reduce/eliminate pollutants contained in the exhaust gas, such as NOx, HC, particulate matter.

The most implemented configuration for diesel engines has, according to the gas flow direction, a DOC (Diesel oxidation catalyst), a DPF (Diesel particulate filter) and active SCR (selective reduction catalyst). This configuration is called "traditional ATS" in the following. The SCR contributes to the elimination/abatement of NOx, however, it needs to reach at least the so-called "light off" temperature of about 180°C - 250°C.

At cold start, the SCR is practically unable to convert NOx. Technical regulations require the ATS be effective also at cold start, therefore, several possible solutions have been considered to fulfil such restrictive requirements.

The DOC is usually arranged upstream of the SCR to produce NO2 needed for the SCR working in the NOx conversion.

DOC has a relevant mass that drains a relevant heat amount during ATS warm up.

US 2015/337702 A1 discloses an after-treatment system including first and second selective-catalytic-reduction (SCR) catalysts and a valve. The valve is arranged upstream of the first SCR catalyst, of an oxidation catalyst and of a particulate filter. The valve is connected to first and second exhaust flow paths and is movable on the basis of a temperature of the exhaust gas and/or a temperature of the engine, between a first position allowing exhaust gas to flow through the first flow path and bypass the second flow path and a second position allowing exhaust gas to flow through the second flow path and bypass the first flow path. The second SCR catalyst is a low-temperature SCR catalyst disposed in the second flow path.

EP 1 321 641 A1 discloses a first exhaust emission purification device arranged in an exhaust passage and having a first DPF and a first SCR catalyst. In a bypass exhaust passage, there is provided a second exhaust emission purification device having a second DPF and a second SCR catalyst. When the exhaust gas temperature is lower than a predetermined region, the exhaust gas passes through the first exhaust emission purification device.

DE 10 2015 013864 A1 discloses a device comprising: an exhaust main passage fluidly connected to an internal combustion engine; an exhaust secondary passage fluidly connected to the exhaust main passage; a main SCR catalyst arranged in the exhaust main passage; an SCR catalyst arranged in the exhaust secondary passage. An exhaust gas flow of the engine can be at least partially directed into the exhaust secondary passage.

### Summary of the invention

The main object of the present invention to provide an After Treatment system capable to better face a cold start.

Another object of the invention is to propose a method for managing such ATS such that it adjusts its functioning mode according to the ATS temperature and preferably also the engine working conditions.

The main idea of the present invention is to introduce a second DOC followed by a second active SCR, both arranged upstream of a traditional ATS comprising its own sequence DOC-DPF-SCR. This sequence of component is here below called "traditional portion". This traditional portion or group of components is never bypassed, thus always crossed by exhaust gasses.

The second DOC has a size considerably smaller than the DOC of the following traditional portion, thus
- It drains a limited heat during warm up and
- it permits to arrange the second SCR as close as possible to the internal combustion engine.

Such second DOC is preferably optimized for cold function also concerning the active catalyst material, for example, it is coated with Pd/Pt, which is favorable for NO2 formation at low temperature .

The second SCR comprises relative bypass means arranged to bypass only the second SCR and in particular configured to bypass the second SCR after the ATS warm up.

In contrast, the second DOC remains always operative, cooperating with the following traditional portion of the ATS to convert pollutants such as hydrocarbons, CO and SOF. According to a preferred embodiment of the invention, the second SCR has a CUC (clean up catalyst) arranged immediately downstream within the bypass loop or a portion of the second SCR is coated arranged to work as a CUC. When the bypass means disposed to bypass the second SCR, the relative nozzle arranged introduce a urea based reducing agent upstream of the second SCR is inactive.

The urea-based reducing agent nozzle of the SCR, belonging to the traditional portion, is controlled to introduce such urea-based reducing agent in the exhaust gas stream after ATS warm up.

According to a preferred embodiment of the invention, the urea-based reducing agent nozzle of the SCR, belonging to the traditional portion, is controlled to introduce such urea-based reducing agent in the exhaust gas stream also during ATS warm up, in particular such introduction is proportional to the temperature of the exhaust gas reaching the nozzle itself.

According to a preferred embodiment of the invention, the second SCR has a toroidal core with a central inlet working as a dosing module and an annular outlet. This configuration, permits to better insulate the dosing module and facilitate the urea-based reducing agent evaporation before crossing the SCR core.

In addition, a further object of the invention is a vehicle comprising said diesel engine equipped with said ATS.

The appended claims disclose preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a preferred implementation of the invention according to a first operating condition and
- Fig. 2 shows the implementation of figure 1 according to a second operating condition;
- Fig. 3 shows another embodiment of the invention in the secondo operating condition of figure 2.

The same reference numerals and letters in the figures designate the same or functionally equivalent parts. According to the present invention, the term "second element" does not imply the presence of a "first element", first, second, etc. are used only for improving the clarity of the description and they should not be interpreted in a limiting way.

### Detailed description of the preferred embodiments

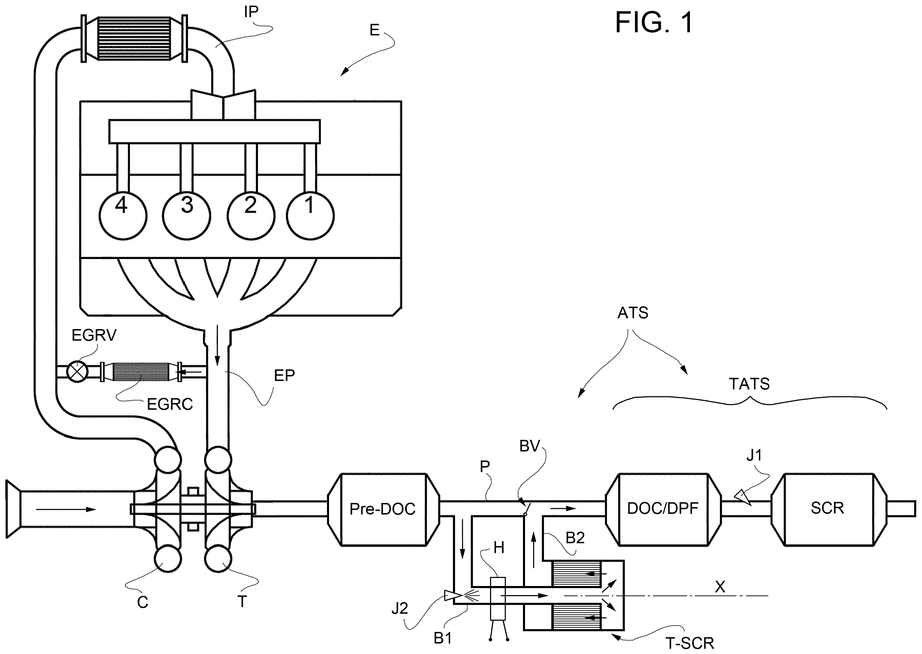

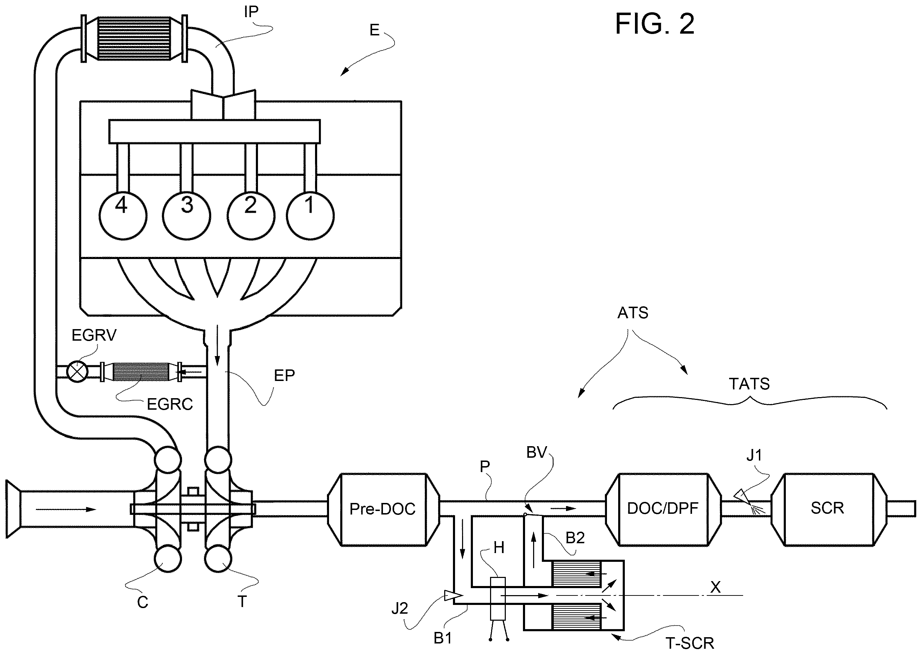

Figures 1 and 2 disclose an internal combustion engine E diesel type or any fuel lean burn spark ignited.

It comprises, for example four cylinders 1 - 4, however, their number is not relevant.

The internal combustion engine has an intake pipe IP and an exhaust pipe EP. Fresh air is sucked through the intake pipe, and then it is mixed with fuel before to be burnt in the cylinders. Fuel injectors are associated to the combustion engine to dose the fuel in the cylinders 1 - 4. The exhaust gas, as known, is delivered to the ambient through an exhaust line EP to which an after-treatment system ATS is connected in order to reduce the pollutants contained in the exhaust gas.

Preferably, the engine has a turbocharger comprising a compressor C arranged on the intake line to compress the fresh air and a turbine T arranged on the exhaust line EP arranged to exploit the energy content in the exhaust gas to drive in rotation the compressor.

According to the present invention, the ATS is a known ATS coupled with a diesel engine E or fuel lean burn spark ignited engine. The ATS comprises in sequence a DOC, a DPF and an active SCR, namely provided with its own nozzle J1 to introduce a urea based reducing agent before the SCR.

As alternative, the SCR and the DPF can be integrated in a single component usually called "SCR on Filter": SCRoF. According to the present invention, the ATS further comprises a second DOC, indicated as pre-DOC and a second active SCR, indicated as T-SCR, arranged upstream of the "traditional" ATS in such a way that the pre-DOC is upstream of the second SCR and the latter is upstream of the traditional ATS: DOC-DPF-SCR, indicated in the figure with T-ATS.

The terms "following", "upstream", "downstream" shall be interpreted according to the exhaust gas circulation from the internal combustion engine to the environment.

The pre-DOC has a reduced mass in comparison with the following DOC of the T-ATS, thus it drains a limited heat. Advantageously, the limited size of the pre-DOC permits to arrange the T-SCR as close as possible to the exhaust port of the internal combustion engine E. Therefore, the second SCR (T-SCR) is operative in a few moments after engine cranking due to the reduced dissipation of heat through the piping and the heating of the pre-DOC.

According to the present invention, the second SCR (T-SCR) further comprises bypass means consisting in an inlet pipe B1 and an outlet pipe B2 connected to the principal ATS pipe P and a valve BV capable to force the exhaust gas to cross or not the second SCR.

During ATS warm up, as depicted on figure 1, the valve BV is arranged to force the exhaust gasses to cross the second SCR and its own nozzle J2 is active to introduce a urea based reducing agent in the gas stream crossing the second SCR.

After the ATS warm up, as depicted on figure 2, the valve BV is arranged to force the exhaust gasses to bypass the second SCR and its own nozzle J2, the latter being deactivated.

Before its bypassing, the T-SCR is preconditioned, namely NH3 is stored (adsorbed) for a next use such as a next cold start event. This allows immediate activation even at exhaust temperatures of about ca. 150°C as soon as NO2 from the Pre-DOC is present, also without Urea or gaseous NH3-injection. Preferably, the T-SCR is suitably coated, for example with a Cu_Zeolite formulation.

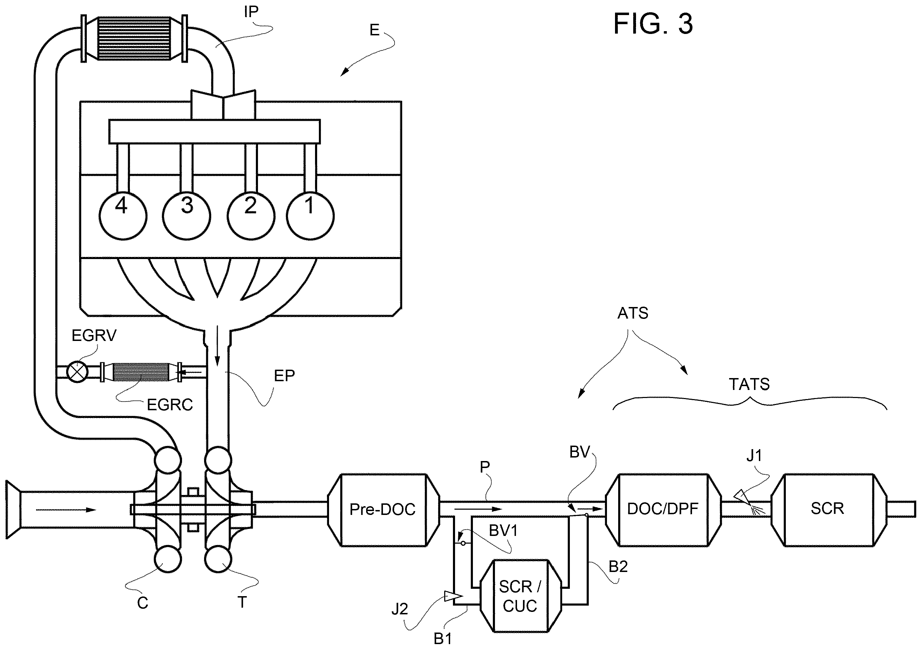

According to another preferred embodiment of the invention, disclosed on figure 3, another valve BV1 is arranged in the inlet pipe B1 and works exactly as the valve BV, namely both are simultaneously open or close. The scope of this second valve is to obtain a good insulation of the second SCR in order to avoid desorption of NH3 due to the high temperatures reached along the ATS after warm up.

Indeed, NH3 can be stored at relatively low temperatures, below 250 - 300°C. At higher temperatures stored NH3 would be again released, thus it cannot be exploited for a next use of the second SCR.

Therefore, the optimal temperature to bypass the second SCR is between 250 - 300°C, because this range is optimal for preconditioning it, the more increases the temperature, the less NH3 is stored.

However, occasionally, namely after 50 - 100 cold starts, the valve(s) VB (and VB1) is (are) open while the temperature of the ATS is well beyond the switching temperature of about 250-300°C. This operation, carried out, preferably, for some minutes, would be useful when Sulphur or HC-derived deposits deteriorate T-SCR activity. Preferably, the pre-DOC and/or the T-SCR comprise heating means, for example electric type. Any kind of heater H can be implemented before the T-SCR core or before a pre-DOC.

Preferably, an electric heater, in the form of a coil, is arranged in front of the nozzle J1 as depicted in EP2826973.

While after ATS warm up the nozzle J2 is deactivated, during ATS warm the nozzle J1 can be gradually activated, due to the fact that the T-ATS, and thus the first SCR, is always crossed by the gas stream.

Preferably, the length of the portion of the principal pipe P between the pre-DOC and the DOC is less than the sum of the lengths of the inlet and outlet pipes B1 and B2. Advantageously, this permits to easily maintain the T-ATS temperature above the light off temperature due to a short piping length.

The T-SCR, preferably, has a toroidal core with a central inlet designed as a dosing module and an annular outlet. A suitable Urea mixer can be included in the mixing pipe.

The T-SCR is designed in such a way the gas stream enters the according to a direction coincident to a rotational symmetry axis of the SCR core. Then, the gas stream is diverted backwards to cross the toroidal core. During the crossing of the core, the stream flows according to parallel and annularly symmetric direction with respect such rotational symmetry axis.

The core inlet is connected with said inlet pipe B1 and the core outlet is connected to the outlet pipe B2. In addition, the outlet pipe B2 communicates with the pipe P, in a point downstream with respect to the inlet pipe B1.

This configuration, permits to better insulate the dosing module and facilitate the urea-based reducing agent evaporation before crossing the T-SCR core. However it is not mandatory, indeed, figure 3 shows a an traditional example of SCR-T with inlet and outlet arranged according to opposite sides of the SCR core.

Preferably, the nozzle J1 of the T-SCR is arranged at a curve of the inlet pipe B1 to inject the urea based reducing agent axially with respect to said symmetry axis.

According to a preferred embodiment of the invention, the urea-based reducing agent nozzle J2 of the SCR, belonging to the T-ATS, is controlled to introduce such urea-based reducing agent in the exhaust gas stream also during ATS warm up. Preferably, such introduction is proportional to the temperature of the exhaust gas reaching the nozzle J1 itself.

According to known SCR operation of traditional ATSs, during warm up not enough urea-based reducing agent can be evaporated. However, more dosing leads to Urea derived deposits leading to clog mainly the nozzle and urea mixer. According to the present invention, no "early" dosing at very low temperature will be needed because of "preconditioning" procedure described above. Also gaseous NH3 dosing would not bring an advantage vs. a well preconditioned SCR- catalyst.

Thus, dosing can start at a later time, when the second SCR has reached the mentioned light-off temperature (e.g. 180 - 250°C). Therefore, any deposit formation is avoided.

The ATS could also comprise a muffler (not shown) to silence the noise produced by the internal combustion engine.

The diesel engine can comprise EGR means, per se known, to recirculate exhaust gasses. Figures 1 and 2 show a high pressure EGR, also known as "short route EGR". High pressure EGR comprise a pipe EGRP connecting a point of the exhaust line EP upstream of the turbine T and a point of the inlet line IP downstream of the compressor C. On the pipe EGRP is arranged a valve EGRV to control the amount of recirculated gas and optionally a cooler EGRC to refresh such exhaust gas before its mixing at the engine intake.

The ATS can have a control unit capable to control its operating conditions.

According to a preferred embodiment of the invention, said control unit is operatively integrated in the engine control unit ECU, programmed to operate the internal combustion engine and also the bypass ATS functions and the above "preconditioning" procedure.

This invention can be implemented advantageously in a computer program comprising program code means for performing the steps of such method, when such program is run on a control unit capable to control the operating conditions of said ATS.

For this reason, the patent shall also cover such computer program and the computer-readable medium that comprises a recorded message, such computer-readable medium comprising the program code means for performing the steps of such method, when such program is run on a control unit capable to control the operating conditions of said ATS.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. After Treatment System (ATS) for an internal combustion engine comprising a following group (T-ATS) of components arranged in sequence according to an exhaust gas flow direction:
- a first Diesel oxidation catalyst (DOC);
- a diesel particulate filter (DPF);
- a first active selective Catalytic reduction device (SCR) comprising a first doser (J1) arranged immediately upstream of the first SCR to introduce an urea-based reducing agent therein;
wherein the ATS further comprises a second DOC (pre-DOC) followed by a second active SCR (T-SCR), both arranged upstream of said group (T-ATS) and
wherein said second active SCR has
- a second doser (J2) arranged immediately upstream thereof to introduce an urea-based reducing agent therein and
- bypass means (B1, B2, V) arranged to force an exhaust gas to cross also the second SCR during ATS warm up and to bypass said second SCR only, after ATS warm up;
and wherein said second doser (J2) is arranged to introduce an excess of urea-based reducing agent immediately before bypassing of the second SCR in order to store NH3 ready for a next ATS use.

2. ATS according to claim 1, wherein said second doser (J2) is arranged to dose said urea-based reducing agent only during said ATS warm up.

3. ATS according to claim 1 or 2, wherein said first doser (J1) is arranged to dose said urea-based reducing agent during said ATS warm up increasingly with an exhaust gas temperature crossing said first SCR.

4. ATS according to any one of the previous claims 1 - 3, wherein said second DOC has a mass smaller than the mass of said first DOC and/or is coated with Cu_Zeolite or equivalent.

5. ATS according to any one of previous claims, further comprising a heater arranged upstream of said second SCR (T-SCR).

6. ATS according to claim 5, wherein said heater is of electric type arranged upstream or within said second DOC and/or arranged between said second doser (J2) and said second SCR(T-SCR).

7. ATS according to claim 1, wherein said second (J2) and/or said first doser (J1) are configured not to dose said urea based reducing agent at warm up as long as said stored NH3 stored is available.

8. Internal combustion engine (E) comprising an after treatment system (ATS) according to any one of the previous claims from 1 to 7.

9. Method for controlling an ATS according to any one of the previous claims from 1 to 7, comprising the step to control said bypass means to force an exhaust gas stream to cross said second SCR during ATS warm up and to activate accordingly said second doser (J2);
and further comprising the step, after said ATS warm up, to control said second doser (J2) to inject an excess of said urea-based reducing agent just before said bypass means bypassing said second SCR in order to store ammonia in said second SCR ready for a next ATS use.

10. A computer program comprising program code means for performing the steps of the method according to claim 9, when such computer program is run on a control unit capable to control the operating conditions of the ATS according to anyone of claims 1-7.

11. A computer readable medium having a computer program recorded thereon, the computer program being according to claim 10.

## Patentansprüche

1. Nachbehandlungssystem (ATS) für eine Brennkraftmaschine, wobei das Nachbehandlungssystem eine folgende Gruppe (T-ATS) von Komponenten umfasst, die in einer Abgasströmungsrichtung der Reihe nach angeordnet sind:
- einen ersten Diesel-Oxidationskatalysator (DOC);
- einen Diesel-Partikelfilter (DPF);
- eine erste Vorrichtung für die aktive selektive katalytische Reduktion (SCR), die eine erste Dosiereinrichtung (J1), die unmittelbar auf der Einlassseite der ersten SCR angeordnet ist, um in sie ein Reduktionsmittel auf Harnstoffgrundlage einzuleiten, enthält;
wobei das ATS ferner einen zweiten DOC (Vor-DOC) umfasst, auf den eine zweite SCR (T-SCR) folgt, die beide auf der Einlassseite der Gruppe (T-ATS) angeordnet sind, wobei die zweite aktive SCR Folgendes aufweist:
- eine zweite Dosiereinrichtung (J2), die unmittelbar auf der Einlassseite hiervon angeordnet ist, um in sie ein Reduktionsmittel auf Harnstoffgrundlage einzuleiten, und
- ein Umgehungsmittel (B1, B2, V), das dafür ausgelegt ist, ein Abgas zu drängen, damit es während des ATS-Aufwärmens ebenfalls die zweite SCR durchquert und nach dem ATS-Aufwärmen nur die zweite SCR umgeht;
und wobei die zweite Dosiereinrichtung (J2) dafür ausgelegt ist, unmittelbar vor dem Umgehen der zweiten SCR einen Überschuss an Reduktionsmittel auf Harnstoffgrundlage einzuleiten, um NH₃ bereit für eine nächste ATS-Verwendung zu speichern.

2. ATS nach Anspruch 1, wobei die zweite Dosiereinrichtung (J2) dafür ausgelegt ist, das Reduktionsmittel auf Harnstoffgrundlage nur während des ATS-Aufwärmens zu dosieren.

3. ATS nach Anspruch 1 oder 2, wobei die erste Dosiereinrichtung (J1) dafür ausgelegt ist, das Reduktionsmittel auf Harnstoffgrundlage während des ATS-Aufwärmens mit einer Temperatur des Abgases, das die erste SCR durchquert, zunehmend zu dosieren.

4. ATS nach einem der vorhergehenden Ansprüche 1-3, wobei der zweite DOC eine kleinere Masse als der erste DOC aufweist und/oder mit Cu-Zeolith oder äquivalent beschichtet ist.

5. ATS nach einem der vorhergehenden Ansprüche, das ferner eine Heizeinrichtung umfasst, die auf der Einlassseite der zweiten SCR (T-SCR) angeordnet ist.

6. ATS nach Anspruch 5, wobei die Heizeinrichtung vom elektrischen Typ ist, wobei sie auf der Einlassseite oder innerhalb des zweiten DOC angeordnet ist und/oder zwischen der zweiten Dosiereinrichtung (J2) und der zweiten SCR (T-SCR) angeordnet ist.

7. ATS nach Anspruch 1, wobei die zweite (J2) und/oder die erste Dosiereinrichtung (J1) dafür konfiguriert sind, das Reduktionsmittel auf Harnstoffgrundlage beim Aufwärmen nicht zu dosieren, solange das gespeicherte NH3 verfügbar ist.

8. Brennkraftmaschine (E), die ein Nachbehandlungssystem (ATS) nach einem der vorhergehenden Ansprüche 1 bis 7 umfasst.

9. Verfahren zum Steuern eines ATS nach einem der vorhergehenden Ansprüche 1 bis 7, wobei das Verfahren den Schritt des Steuerns des Umgehungsmittels, um einen Abgasstrom während des ATS-Aufwärmens zu drängen, damit er die SCR durchquert, und um dementsprechend die zweite Dosiereinrichtung (J2) zu aktivieren umfasst;
und ferner nach dem ATS-Aufwärmen den Schritt des Steuerns der zweiten Dosiereinrichtung (J2), damit sie einen Überschuss des Reduktionsmittels auf Harnstoffgrundlage einspritzt, unmittelbar bevor das Umgehungsmittel die zweite SCR umgeht, um Ammoniak in der zweiten SCR bereit für eine nächste ATS-Verwendung zu speichern, umfasst.

10. Computerprogramm, das Programmcodemittel umfasst, um die Schritte des Verfahrens nach Anspruch 9 auszuführen, wenn dieses Computerprogramm in einer Steuereinheit, die in der Lage ist, die Betriebsbedingungen des ATS nach einem der Ansprüche 1-7 zu steuern, ausgeführt wird.

11. Computerlesbares Medium, in dem ein Computerprogramm aufgezeichnet ist, wobei das Computerprogramm wie in Anspruch 10 beschaffen ist.

## Revendications

1. Système de post-traitement (ATS) pour un moteur à combustion interne comprenant un groupe suivant (T-ATS) de composants agencés en séquence selon une direction d'écoulement de gaz d'échappement :
- un premier catalyseur d'oxydation diesel (DOC) ;
- un filtre à particules diesel (DPF) ;
- un premier dispositif de réduction catalytique sélective (SCR) actif comprenant un premier doseur (J1) agencé immédiatement en amont du premier SCR pour introduire dedans un agent réducteur à base d'urée ;
dans lequel l'ATS comprend en outre un second DOC (pré-DOC) suivi d'un second SCR actif (T-SCR), tous deux agencés en amont dudit groupe (T-ATS) et
dans lequel ledit second SCR actif a
- un second doseur (J2) agencé immédiatement en amont de celui-ci pour introduire dedans un agent réducteur à base d'urée et
- des moyens de contournement (B1, B2, V) agencés pour forcer un gaz d'échappement à traverser également le second SCR pendant le réchauffement de l'ATS et à contourner ledit second SCR uniquement, après le réchauffement de l'ATS ;
et dans lequel ledit second doseur (J2) est agencé pour introduire un excès d'agent réducteur à base d'urée immédiatement avant le contournement du second SCR afin de stocker du NH3 prêt pour une prochaine utilisation d'ATS.

2. ATS selon la revendication 1, dans lequel ledit second doseur (J2) est agencé pour doser ledit agent réducteur à base d'urée uniquement pendant ledit réchauffement de l'ATS.

3. ATS selon la revendication 1 ou 2, dans lequel ledit premier doseur (J1) est agencé pour doser ledit agent réducteur à base d'urée pendant ledit réchauffement d'ATS de plus en plus avec une température de gaz d'échappement traversant ledit premier SCR.

4. ATS selon l'une quelconque des revendications précédentes 1 à 3, dans lequel ledit second DOC a une masse inférieure à la masse dudit premier DOC et/ou est recouvert de Cu-zéolite ou d'un équivalent.

5. ATS selon l'une quelconque des revendications précédentes, comprenant en outre un dispositif de chauffage agencé en amont dudit second SCR (T-SCR).

6. ATS selon la revendication 5, dans lequel ledit dispositif de chauffage est du type électrique agencé en amont ou à l'intérieur dudit second DOC et/ou agencé entre ledit second doseur (J2) et ledit second SCR (T-SCR) .

7. ATS selon la revendication 1, dans lequel ledit second (J2) et/ou ledit premier doseur (J1) sont configurés pour ne pas doser ledit agent réducteur à base d'urée au réchauffement tant que ledit NH3 stocké stocké est disponible.

8. Moteur à combustion interne (E) comprenant un système de post-traitement (ATS) selon l'une quelconque des revendications précédentes de 1 à 7.

9. Méthode pour commander un ATS selon l'une quelconque des revendications précédentes de 1 à 7, comprenant l'étape de commande desdits moyens de contournement pour forcer un flux de gaz d'échappement à traverser ledit second SCR pendant le réchauffement de l'ATS et pour activer en conséquence ledit second doseur (J2) ;
et comprenant en outre l'étape, après ledit réchauffement d'ATS, de commande dudit second doseur (J2) pour injecter un excès dudit agent réducteur à base d'urée juste avant le contournement par lesdits moyens de contournement dudit second SCR afin de stocker de l'ammoniac dans ledit second SCR prêt pour une prochaine utilisation d'ATS.

10. Programme d'ordinateur comprenant des moyens de code de programme pour effectuer les étapes de la méthode selon la revendication 9, lorsqu'un tel programme d'ordinateur est exécuté sur une unité de commande capable de commander les conditions de fonctionnement de l'ATS selon l'une quelconque des revendications 1 à 7.

11. Support lisible par ordinateur ayant un programme d'ordinateur enregistré sur celui-ci, le programme d'ordinateur étant selon la revendication 10.
